# EUROPÄISCHE PATENTSCHRIFT

(11) **EP 0 581 228 B1**
(45) Veröffentlichungstag und Bekanntmachung des Hinweises auf die Patenterteilung: **20.11.1996**
(21) Anmeldenummer: 93111928.3
(22) Anmeldetag: 26.07.1993
(51) Int. Cl.: B60R 22/44

(54) **Federangetriebener Aufroller für Sicherheitsgurte bei Kraftfahrzeugen**
Spring-based seat belt retraction in motor vehicles
Enrouleur de ceintures de sécurité rappelé par ressort pour véhicules automobiles

(30) Priorität: 29.07.1992 DE 4225073; 10.12.1992 DE 4241730
(43) Veröffentlichungstag der Anmeldung: 02.02.1994
(73) Patentinhaber: TAKATA (EUROPE) VEHICLE SAFETY TECHNOLOGY GmbH, D-89081 Ulm (DE)
(72) Erfinder: Kopetzky, Robert, D-73557 Mutlangen (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- DE-A- 2 451 400
- DE-A- 2 553 642
- DE-B- 2 547 586
- US-A- 1 968 536

## Beschreibung

Die Erfindung betrifft einen federangetriebenen Aufroller für Sicherheitsgurte bei Kraftfahrzeugen nach dem Oberbegriff des Patentanspruchs 1. Dieser Aufroller ist aus der DE-B-2 547 586 bekannt.

Bei federangetriebenem Gurtaufroller besteht das Problem, daß mit zunehmendem Auszug des Sicherheitsgurtes die Federspannung zunimmt, so daß die beispielsweise am Anfang nur 2N betragende Rückzugskraft am Sicherheitsgurt bei voll ausgezogenem Gurt bis 18N anwachsen kann. Zu dieser starken Zunahme der Rückzugskraft trägt auch der Umstand bei, daß der Durchmesser der Gurtbandrolle auf der Wickelspindel mit zunehmendem Auszug des Gurtes abnimmt, wodurch zunehmend eine größere Kraft auf den Gurt übertragen wird.

Um diesen Nachteil zu beheben, ist es bereits bekannt geworden (DE-OS 24 51 400 = US-PS 39 97 126; DE-OS 25 53 642; DE-OS 33 13 580; DE-U-75 33 791), zwischen die Gurtaufrollspindel und die durch Drehen einer Wellen zu spannende Spiralfeder ein Getriebe zu schalten, welches aus zwei parallel zueinander angeordneten und seitlich miteinander ausgerichteten Seilrollen besteht, die gegenläufig konisch oder sonstwie verjüngend zulaufen und durch ein auf sie aufgewickeltes Zugglied, insbesondere Seil oder Band drehfest verbunden sind. Durch geeignete Ausbildung der Seilrollen kann somit beim Auszug des Sicherheitsgurtes eine weitgehend konstante Rückzugskraft erzielt werden. Es ist auch möglich, sonstige gewünschte Rückzugskraftverläufe durch geeignete Formgebung der Seilrollen zu verwirklichen.

Bei den bekannten Gurtaufrollern ist jeweils für die Spiralfeder ein besonderer Unterbringungsraum, z. B. in einem axial an das erweiterte Ende der Verjüngung der zweiten Rolle angesetzten Federgehäuse (DE-B-25 47 586) vorgesehen, so daß die bekannten Gurtaufroller insbesondere in Axialrichtung sehr platzaufwendig sind.

Das Ziel der vorliegenden Erfindung besteht darin, einen federangetriebenen Aufroller für Sicherheitsgurte bei Kraftfahrzeugen der eingangs genannten Gattung zu schaffen, bei welchem die Federanordnung so untergebracht ist, daß hierfür kein zusätzlicher Raumbedarf besteht.

Zur Lösung dieser Aufgabe sind die Merkmale des kennzeichnenden Teils des Patentanspruchs 1 vorgesehen. Vorteilhafte Weiterbildungen der Erfindung entnimmt man den Unteransprüchen.

Erfindungsgemäß wird also die zweite Seilrolle teilweise hohl ausgebildet und gleichzeitig als Unterbringungsgehäuse für die Federanordnung, insbesondere die Spiralfeder verwendet. Dadurch wird nicht nur ein zusätzlicher Unterbringungsraum für die Federanordnung vermieden, sondern es wird auch eine Gewichtseinsparung durch die teilweise Hohlausbildung der zweiten Seilrolle erzielt. Weiter wird so eine optimale Kraftübertragung von der Spiralfeder auf die zweite Seilrolle ohne besondere Kraftübertragungsmittel geschaffen.

Besonders vorteilhaft sind die Ausführungsformen nach den Ansprüchen 10 oder 11, weil durch die Vergrößerung des Durchmessers der zweiten Seilrolle auf Kosten des Durchmessers der ersten Seilrolle im inneren der zweiten Rolle mehr Platz für die Unterbringung der Federanordnung bereitgestellt wird. Diese Ausbildung hat außerdem den Vorteil, daß die von der Federanordnung ausgeübte Zugkraft für den Sicherheitsgurt stärker untersetzt wird, so daß für einen bestimmten Aufwickelweg des Sicherheitsgurtes weniger Umdrehung der zweiten Seilrolle erforderlich sind. Es kann dadurch am Sicherheitsgurt eine größere Aufwickellänge zur Verfügung gestellt werden. Weiter kann so erreicht werden, daß am Beginn der Auszugbewegung ein Rollenubersetzungsverhaltnis von 1 : 1 zur Verfügung steht, das mit zunehmendem Auszug abnimmt.

Die Schaffung eines größeren Unterbringungsraumes für die Federanordnung ist also in vorteilhafter Weise mit der Zur-Verfügungstellung einer größeren Aufwickellänge am Sicherheitsgurt verbunden. Der größere mittlere Durchmesser der zweiten Seilrolle wird dabei platzmäßig zumindest teilweise durch einen entsprechend geringeren mittleren Durchmesser der ersten Seilrolle kompensiert.

Die Erfindung wird im folgenden beispielsweise anhand der Zeichnung beschrieben; in dieser zeigt:
- Fig. 1: eine teilweise geschnittene Ansicht eines erfindungsgemäßen federangetriebenen Aufrollers für einen Sicherheitsgurt;
- Fig. 2: eine schematische, perspektivische Ansicht der beiden durch ein Seil miteinander verbundenen Seilrollen der Ausführungsform nach Fig. 1,
- Fig. 3: eine Stirnansicht der beiden Seilrollen in Richtung des Pfeiles III von Fig. 2 und 4 zur Veranschaulichung der beiden Endstadien der Seilrollendrehung, wobei in ausgezogenen und strichpunktierten Linien zwei verschiedene Ausführungsbeispiele wiedergegeben sind,
- Fig. 4: eine Ansicht analog Fig. 1 nur der Seilrollen mit aufgewickeltem Seil zur schematischen Veranschaulichung der unterschiedlichen axialen Bindungsabstände der Führungsrillen in den Seilrollen,
- Fig. 5: eine schematische Schnittansicht einer weiteren Ausführungsform eines erfindungsgemäßen federangetriebenen Aufrollers für Sicherheitsgurte bei Kraftfahrzeugen,
- Fig. 6: eine entsprechende schematische Schnittansicht einer weiteren vorteilhaften Ausführungsform,
- Fig. 7: ein Auszugskraft(K)- Auszugslängen(L)-Diagramm eines klassischen Gurtaufrollers und einem solchen nach Fig. 1 bis 4,
- Fig. 8: ein entsprechendes Diagramm der Ausführungsform nach Fig. 5 und

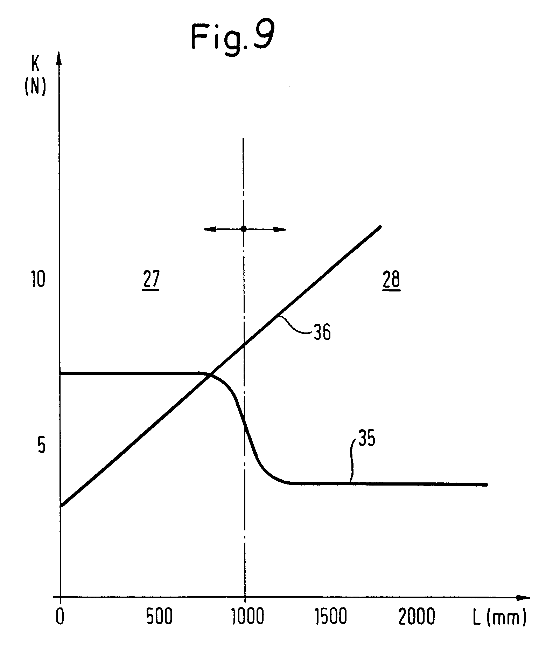

- Fig. 9: ein entsprechendes Diagramm der Ausführungsform nach Fig. 6.

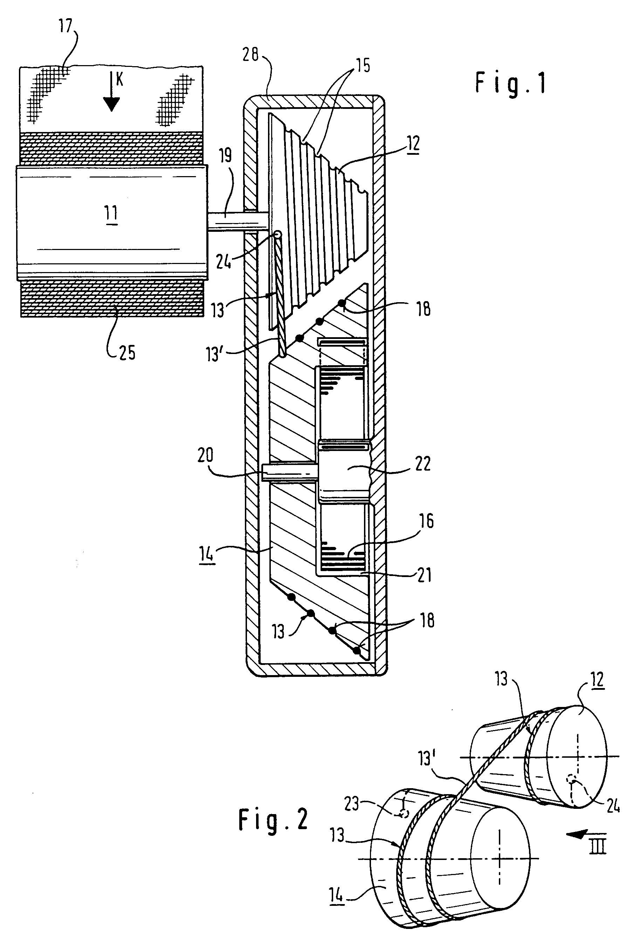

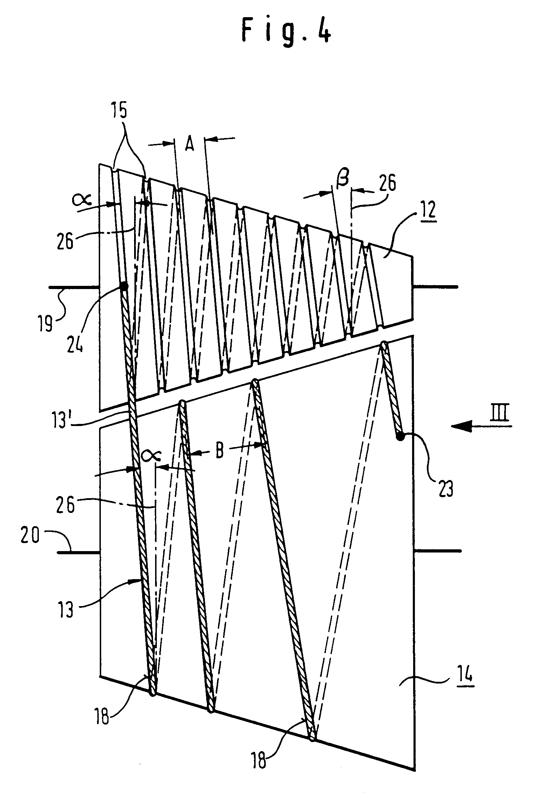

Nach Fig. 1 weist ein erfindungsgemäßer Gurtaufroller eine Gurtrolle 11 auf, auf die ein nur mit einem kurzen Stück angedeuteter Sicherheitsgurt 17 aufwickelbar ist. Die Gurtrolle 11 ist mittels einer Welle 19 drehbar an einem Gehäuse 18 gelagert. An dem von der Gurtrolle 11 abgewandten Ende der Welle 19 ist innerhalb des Gehäuses 28 eine konisch ausgebildete Seilrolle 12 angeordnet, welche auf ihrem Umfang mit einer wendelförmigen Führungsrille 15 versehen ist, deren Verlauf in Fig. 4 schematisch angedeutet ist.

Nach Fig. 1 und 4 ist neben der Seilrolle 12 mit paralleler Achse 20 und seitlich ausgerichtet eine weitere Seilrolle 14 vorgesehen, welche gegenläufig zu der ersten Seilrolle 12 konisch verläuft und deren kleinerer Durchmesser gleich dem größeren Durchmesser der ersten Seilrolle 12 ist. Auch die zweite Seilrolle 14 weist auf ihrem Umfang eine wendelförmige Führungsrille 18 auf, deren genauer geometrischer Verlauf Fig. 4 zu entnehmen ist.

Die zweite Seilrolle 14 sitzt drehbar auf einer gehäusefesten Welle 20, die parallel und im seitlichen Abstand zur Welle 19 am Gehäuse 28 befestigt ist.

Die zweite Seilrolle 14 weist gemäß Fig. 1 einen koaxialen Hohlraum 21 auf, in welchem eine Spiralfederanordnung 16 vorgesehen ist, die einerseits an einem die Welle 20 tragenden gehäusefesten Zapfen 22 und andererseits am Innenumfang der Seilrolle 14 befestigt ist. Die Spiralfeder 16 überträgt auf die Seilrolle 14 ein Drehmoment, welche ein in ihre Führungsrille 18 eingelegtes und gemäß Fig. 4 bei 23 befestigtes Seil 13 aufzuwickeln trachtet. Das Seil 13 erstreckt sich nach den Fig. 1 und 4 von dem engsten Teil der Seilrolle 14 zu einem damit ausgerichteten Teil der Führungsrille 15 der Seilrolle 12, wo das Seil 13 bei 24 an der Oberfläche der Seilrolle 12 befestigt ist.

In der aus den Fig. 1 und 4 ersichtlichen Wickelposition ist das Seil 13 weitgehend vollständig auf die Seilrolle 14 aufgewickelt und weitgehend vollständig von der ersten Seilrolle 12 abgewickelt. In diesem Zustand ist der Gurtwickel 25 auf der Gurtrolle 11 am dicksten, d. h., daß nunmehr eine maximale Gurtlänge auf der Gurtrolle 11 aufgewickelt ist und der Gurt 17 seine geringste Länge erreicht hat.

Wird nun der Gurt 17 entgegen der Rückzugskraft K in Fig. 1 ausgezogen, so dreht sich die erste Seilrolle 12 in einem Drehsinn, daß das Seil 13 sukzessive auf die erste Seilrolle 12 aufgewickelt wird, wobei es sich zunehmend in die Führungsrille 15 einlegt. Gleichzeitig wird das Seil 13 mehr und mehr von der zweiten Seilrolle 14 abgewickelt.

Da erfindungsgemäß der Steigungswinkel α, d. h. der Winkel zwischen der geradlinigen Verlängerung der Führungsrillen 15, 18 an den Einmündungsstellen des geradlinigen Seilstückes 13' und der senkrecht auf der Drehachse 19, 20 stehenden Ebene 26, beider Führungsrillen 15, 18 an den Einmündungsstellen gleich ist und außerdem durch entsprechende Befestigung der Seilenden bei 23, 24 dafür gesorgt ist, daß das frei und geradlinig zwischen den Seilrollen 12, 14 verlaufende Seilstück 13' knickfrei in die beiden Führungsrillen 15, 18 einmündet, nimmt bei gleichmäßigem axialen Abstand A der Führungsrille 15 auf der ersten Seilrolle 12 der axiale Abstand B der Windungen der Führungsrille 18 auf der einen größeren Durchmesser aufweisenden Seilrolle 14 in der aus Fig. 4 ersichtlichen Weise axial zu größerem Durchmesser hin stetig zu.

Daß die Windungen der wendelförmigen Führungsrille 15 auf der ersten Seilrolle 12 um das gleiche axiale Stück A versetzt sind, bedeutet, daß vom großen zum kleinen Durchmesser der Steigungswinkel sich von α auf β erhöht.

Es wäre auch denkbar, die Führungsrille 15 auf dem Umfang der Seilrolle 12 so zu führen, daß die Steigung α konstant ist, was jedoch bedeuten würde, daß der axiale Abstand A benachbarten Windungen der Führungsrille 15 mit kleiner werdendem Durchmesser abnimmt. Dementsprechend wäre auch der axiale Abstand B benachbarter Windungen der Führungsrille 18 der Seilrolle 14 zu reduzieren und dort der Steigungswinkel konstant zu lassen.

In Fig. 2 ist die Anordnung der beiden gegenläufig konischen Seilrollen 12, 14 perspektivisch schematisch wiedergegeben, ohne daß die Führungsrillen 15, 18 gezeigt sind.

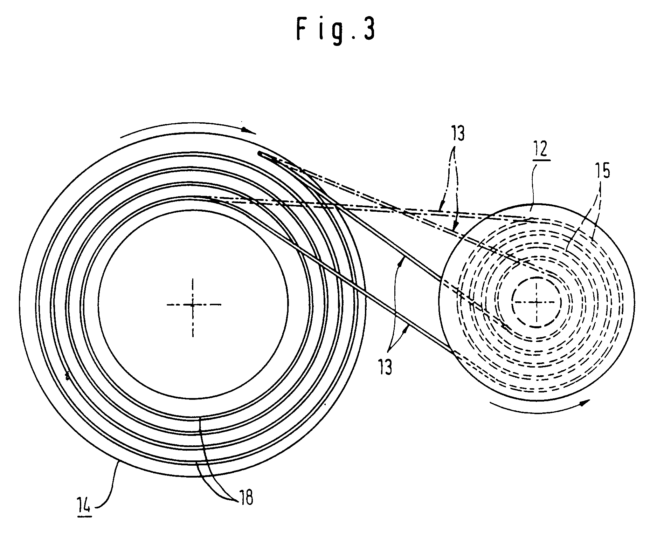

Fig. 3 zeigt bei zwei Ausführungsformen die beiden Endpositionen des Seiles 13 im voll aufgewickelt bzw. voll abgewickelten Zustand auf den beiden Seilrollen 12 bzw. 14.

Nach Fig. 3 ist das Seil 13 in ausgezogenen Linien über Kreuz tangential an die benachbarten Seilrollen 12, 14 geführt dargestellt. Strichpunktiert ist der voll aufgewickelte bzw. der voll abgewickelte Zustand des Seiles 13 in einer nicht gekreuzten gleichlaufenden Führung von einer Seilrolle 12 zur benachbarten Seilrolle 14 gezeigt. Erfindungsgemäß sind beide Seilanordnungen (gekreuzt oder gleichlaufend) möglich.

Der kleinere Durchmesser der Seilrolle 12 kann z. B. 15 mm oder etwas größer sein, während der größere Durchmesser der kleineren Seilrolle 12 bei 30 bis 35 mm liegen soll.

Dementsprechend ist der kleinere Durchmesser der Seilrolle 14 30 bis 35 mm und der größere Durchmesser der Seilrolle 14 100 bis 120 mm.

In den folgenden Figuren bezeichnen gleiche Bezugszahlen entsprechende Bauteile wie bei den vorstehend beschriebenen Ausführungsbeispielen.

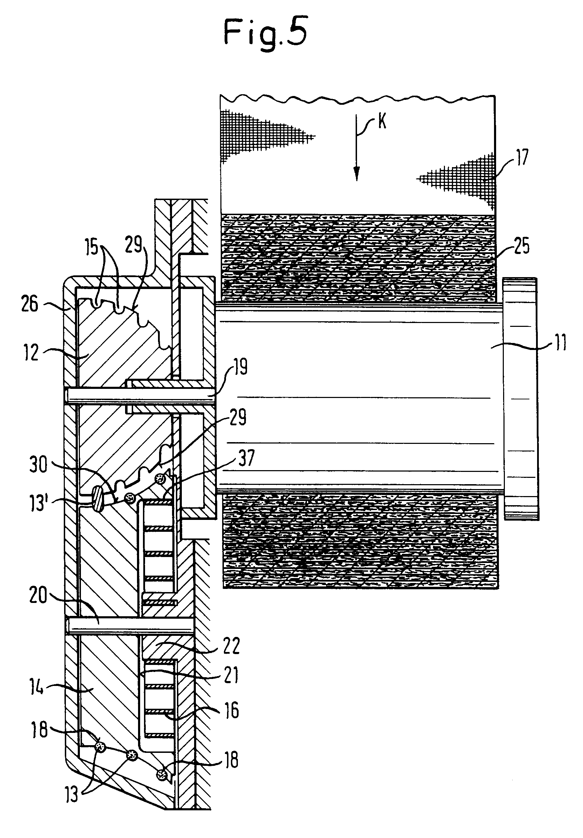

Nach Fig. 5 ist an dem von der Gurtrolle 11 abgewandten Ende der Welle 19 innerhalb des Gehäuses 26 eine mit einer konvexen Erzeugenden 29 versehene Seilrolle 12 angeordnet, welche auf ihrem Umfang wieder mit der wendelförmigen Führungsrille 15 versehen ist. Die Tangente an die Erzeugende 29 verläuft beim größten Durchmesser der Seilrolle 12 etwa horizontal, so daß sie in Richtung der geringeren Durchmesser zur Achse (Welle 19) abfällt. Bevorzugt hat die Erzeugende im wesentlichen Kreisform.

Neben der Seilrolle 12 ist mit paralleler Achse 20 und seitlich ausgerichtet wieder die zweite Seilrolle 14 mit größerem mittleren Durchmesser vorgesehen, welche eine zu Erzeugende 29 komplementäre Erzeugende 30, die konkav gekrümmt ist, aufweist. Der kleinere Durchmesser der Seilrolle 14 entspricht etwa dem größeren Durchmesser der Seilrolle 12. Auf dem Umfang der zweiten Seilrolle 14 ist wieder die wendelförmige Führungsrille 18 vorgesehen.

In der in Fig. 5 ersichtlichen Wickelposition ist das Seil 13 weitgehend vollständig auf die Seilrolle 14 aufgewickelt und weitgehend vollständig von der ersten Seilrolle 12 abgewickelt. In diesem Zustand ist der Sicherheitsgurt 17 am weitesten, das heißt in seine Ruhelage eingezogen, und der Gurtwickel 25 auf der Gurtrolle 11 weist jetzt den größten Durchmesser auf.

Wird nun der Gurt 17 entgegen der Rückzugskraft K in Fig. 1 ausgezogen, so dreht sich die erste Seilrolle 12 in einem Drehsinn, daß das Seil 13 sukzessive auf die erste Seilrolle 12 aufgewickelt wird, wobei sie sich zunehmend in die Führungsrille 15 einlegt. Gleichzeitig wird das Seil 13 mehr und mehr von der zweiten Seilrolle 14 abgewickelt.

Da erfindungsgemäß der Steigungswinkel zwischen der geradlinigen Verlängerung der Führungsrillen 15, 18 an den Einmündungsstellen des geradlinigen Seilstückes 13' und einer senkrecht auf den Drehachsen 19, 20 stehenden Ebene beider Führungsrillen 15, 18 an den Einmündungsstellen gleich ist und außerdem durch die entsprechende Befestigung der Seilenden dafür gesorgt ist, daß das frei und geradlinig zwischen den Seilrollen 12, 14 verlaufende Seilstück 13' knickfrei in die beiden Führungsrillen 15, 18 einmündet, nimmt bei gleichmäßigem Abstand der Führungsrillen 15 auf der ersten Seilrolle 12 der axiale Abstand der Windungen der Führungsrillen 18 auf der einen größeren Durchmesser aufweisenden Seilrolle 14 stetig zu.

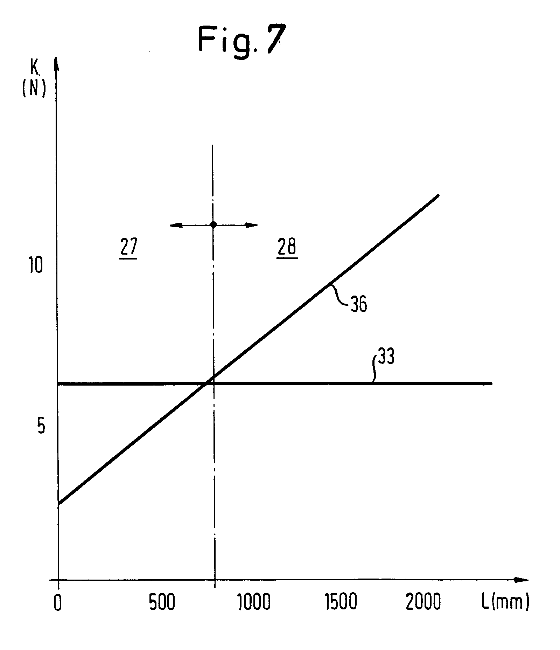

Nach Fig. 7 nimmt wegen der beim Ausziehen stetig zunehmenden Federkraft bei einem klassischen Gurtaufroller ohne die erfindungsgemäßen Seilrollen 12, 14 die Auszugskraft K in Abhängigkeit von der Auszugslänge gemäß der Geraden 36 linear sehr stark zu, so daß die Auszugskraft im Ablegebereich 27 am geringsten und im Tragebereich 28 am größten wird.

Durch die gegenläufig konische Ausbildung der Seilrollen 12, 14 nach den Figuren 1 bis 4 wird unabhängig von der Auszugslänge L, die in Millimetern angegeben ist, eine konstante Auszugskraft (die in Newton angegeben ist) gemäß der geraden Kurve 33 erzielt.

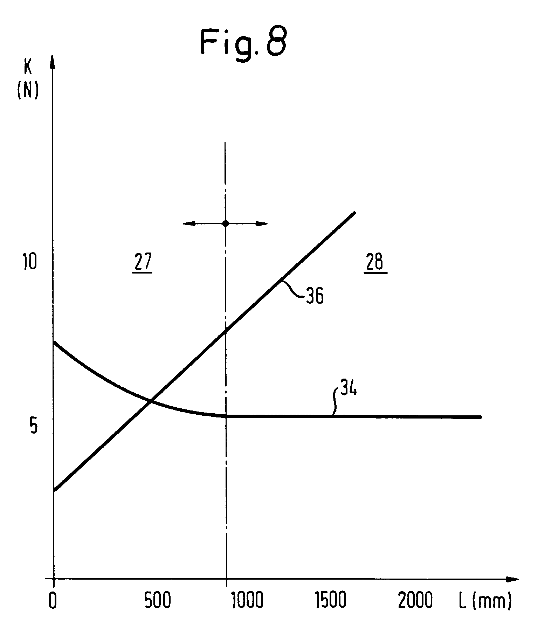

Fig. 8 zeigt außer der Kraft-Weg-Geraden 36 des klassischen Gurtaufrollers auch die Funktion 34, nach der der Gurtaufroller gemäß Fig. 5 arbeitet. Da sich in dem am meisten zurückgezogenen Zustand des Sicherheitsgurtes 17 nach Fig. 5 das Seil 13 auf dem größten Durchmesser der Seilrolle 12 und dem kleinsten Durchmesser der Seilrolle 14 befindet, ist in diesem Zustand die Gurtauszugskraft K am größten.

Da das geradlinige Stück 13' mit zunehmendem Auszug des Sicherheitsgurtes 17 überproportional zu kleineren Durchmessern der Seilrolle 12 und zu größeren Durchmessern der Seilrolle 14 läuft, nimmt die Gurtauszugskraft innerhalb des Ablegebereichs 27 stetig ab, um dann im Tragebereich 28 einen im wesentlichen konstanten Wert anzunehmen.

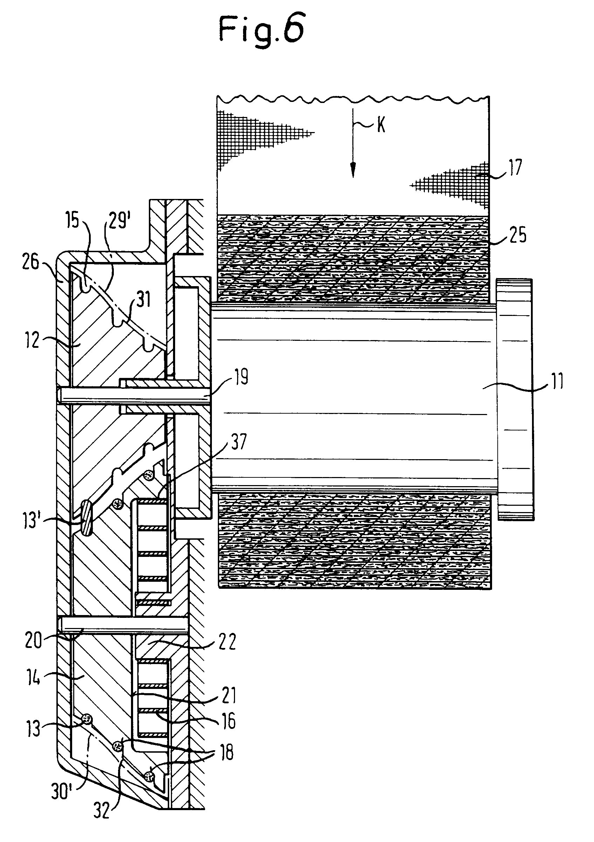

Bei der Ausführungsform nach Fig. 6 sind die gesondert strichpunktiert angedeuteten Erzeugenden 29', 30' der Seilrollen 12, 14 zueinander komplementär ausgebildete Kurven mit jeweils einem Wendepunkt 31 bzw. 32. Dies führt zu einer Auszugskraft-Auszugslängen-Funktion 35 nach Fig. 5. Im Ablegebereich 27 besitzt die Auszugskraft K einen relativ großen annähernd konstanten Wert von beispielsweise 7 N, um dann beim Übergang vom Ablegebereich 27 in den Tragebereich 28 auf einen niedrigeren Wert von beispielsweise 4 N abzufallen, der dann innerhalb des Tragebereichs 28 wieder weitgehend konstant ist.

Die wesentliche Wirkung der Ausführungsformen nach Fig. 5, 6 besteht also darin, daß dann, wenn der Sicherheitsgurt in seine Ruhelage zurückgezogen wird, nach Überwindung eines sich noch im Tragebereich 28 befindlichen Einziehweges von beispielsweise einigen cm ab dem Beginn des Ablegebereiches 27 eine wesentlich größere Rückzugskraft zur Verfügung steht als im Tragebereich 28, wo der Sicherheitsgurt 17 am Körper der Bedienungsperson anliegt und keine zu großen Spannkräfte übertragen soll.

## Patentansprüche

1. Federangetriebener Aufroller für Sicherheitsgurte (17) bei Kraftfahrzeugen mit einer Gurtrolle (11), die drehfest, insbesondere koaxial und direkt, mit einer ersten, sich in einer Axialrichtung verjüngenden Seilrolle (12) mit einer wendelförmigen Führungsrille (15) auf ihrem Umfang verbunden ist, welche über ein entgegen dem Wickelsinn des Sicherheitsgurtes (17) auf der Gurtrolle (11) in die Führungsrille (15) gewickeltes, mit einem Ende an der Seilrolle (12) befestigtes flexibles Zugglied (13) drehfest mit einer weiteren parallel und in seitlicher Ausrichtung zu ihr angeordneten, zweiten in entgegengesetzter Axialrichtung eine Verjüngung aufweisenden Seilrolle (14) mit einer wendelförmigen Führungsrille (18) verbunden ist, an der das andere Ende des Zuggliedes befestigt und in deren Führungsrille (18) das Zugglied aufgewickelt ist und die durch eine Federanordnung (16), vorzugsweise eine Spiralfederanordnung, in Aufwickelrichtung des Zuggliedes (13) auf der zweiten Seilrolle (14) und des Sicherheitsgurtes (17) auf der Gurtrolle (11) vorgespannt ist, wobei die beiden Führungsrillen (15, 18) derart ausgebildet und auf den Seilrollen (12, 14) angeordnet sind, daß das die beiden Seilrollen (12, 14) verbindende gespannte Zuggliedstück (13') zumindest im wesentlichen knickfrei in beide auf den Seilrollen (12, 14) befindlichen Zuggliedstücke übergeht,
die Federanordnung (16) in einem Hohlraum (21) der zweiten Seilrolle (14) untergebracht ist,
dadurch gekennzeichnet, daß der Hohlraum (21) in der Verjüngung der zweiten Seilrolle (14) vorgesehen und zumindest teilweise von der Führungsrille (15) umgeben ist.

2. Aufroller nach Anspruch 1,
dadurch **gekennzeichnet,**
daß der Hohlraum (21) nach einer Stirnfläche der zweiten Seilrolle (14) hin offen ist und die Federanordnung (16) von dort her eingesetzt ist.

3. Aufroller nach Anspruch 1 oder,
dadurch **gekennzeichnet,**
daß der Hohlraum (21) auf der Seite der zweiten Seilrolle (14), zu der hin der Durchmesser zunimmt, vorgesehen ist.

4. Aufroller nach einem der vorhergehenden Ansprüche,
dadurch **gekennzeichnet,**
daß der Hohlraum (21) koaxial zur zweiten Seilrolle (14) angeordnet ist.

5. Aufroller nach einem der vorhergehenden Ansprüche,
dadurch **gekennzeichnet,**
daß die zweite Seilrolle (14) drehbar auf einer gehäusefesten Welle (20) sitzt und die im Hohlraum (21) untergebrachte, als Spiralfeder (16) ausgebildete Federanordnung radial außen an der zweiten Seilrolle (14) und radial innen gehäusefest angebracht ist.

6. Aufroller nach Anspruch 5,
dadurch **gekennzeichnet,**
daß die Spiralfeder (16) radial innen an einem die Welle (20) tragenden gehäusefesten Zapfen (22) mit größerem Durchmesser als die Welle (20) angebracht ist.

7. Aufroller nach einem der vorhergehenden Ansprüche,
dadurch **gekennzeichnet,**
daß die beiden Seilrollen (12, 14) gegenläufig konisch verlaufen.

8. Aufroller nach einem der Ansprüche 1 bis 6,
dadurch **gekennzeichnet,**
daß die Erzeugenden der beiden Seilrollen (12, 14) gegenläufig gekrümmt zueinander verlaufen.

9. Aufroller nach Anspruch 8,
dadurch **gekennzeichnet,**
daß die Erzeugenden der beiden Seilrollen (12, 14) derart gegenläufig gekrümmt sind, daß am Anfang der Gurtauszugsbewegung im Ablegebereich (27) eine größere, sich nur geringfügig ändernde Rückzugskraft vorliegt, die jedoch ab einer vorbestimmten Auszuglänge am Beginn des Tragebereiches (28) sprungartig auf einen niedrigen Wert abnimmt.

10. Aufroller nach einem der vorhergehenden Ansprüche,
dadurch **gekennzeichnet,**
daß der mittlere Durchmesser der die Gurtrolle (11) tragenden ersten Seilrolle (12) deutlich geringer als der mittlere Durchmesser der mit der Federanordnung (16) verbundenen Seilrolle (14) ist.

11. Aufroller nach einem der vorhergehenden Ansprüche,
dadurch **gekennzeichnet,**
daß der größere Durchmesser der ersten Seilrolle (12) im wesentlichen gleich dem kleineren Durchmesser der zweiten Seilrolle (14) ist.

12. Aufroller nach einem der vorhergehenden Ansprüche,
dadurch **gekennzeichnet,**
daß der axiale Rillenabstand der zweiten Seilrolle (14) konstant und größer als der ebenfalls konstante axiale Rillenabstand der ersten Seilrolle (12) ist.

## Claims

1. Spring-driven reeling mechanism for safety belts (17) in motor vehicles comprising a belt reel (11) which is rotationally fixedly connected, in particular coaxially and directly connected to a first cable reel (12) which tapers in an axial direction and has a spirally-shaped guide groove (15) on its periphery; wherein the first cable reel (12) is rotationally fixedly connected, via a flexible draw member (13) wound into the guide groove (15) contrary to the direction of winding of the safety belt (17) on the belt reel (11) and secured at one end to the first cable reel (12), to a further cable reel (14) which has a taper in the opposite axial direction and is arranged parallel to and aligned sideways relative to the first cable reel (12), with the further cable reel (14) having a spiral guide groove (18) to which the other end of the draw member (13) is secured, with the draw member being wound into the guide groove (18) of the further cable reel and with the further cable reel (14) being biased by a spring arrangement (16), preferably by a spiral spring arrangement, in the winding-up direction of the draw member (13) onto the second cable reel (14) and of the safety belt (17) onto the belt reel (11), and wherein the two guide grooves (15, 18) are so shaped and arranged on the cable reels (12, 14) that the tensioned draw member piece (13') which connects the two cable reels (12, 14) merges essentially kink-free into the two draw member pieces on the cable reels (12, 14), with the spring arrangement (16) being accommodated in a hollow cavity (21) of the second cable reel (14), characterised in that the hollow cavity (21) is provided in the taper of the second cable reel (14) and is at least partly surrounded by the guide groove (18).

2. Reeling mechanism in accordance with claim 1, characterised in that the hollow cavity (21) is open towards one end face of the second cable reel (14) and the spring arrangement (16) is inserted from there.

3. Reeling mechanism in accordance with claim 1 or claim 2, characterised in that the hollow cavity (21) is provided at the side of the second cable reel (14) to which the diameter increases.

4. Reeling mechanism in accordance with any one of the preceding claims, characterised in that the hollow cavity (21) is arranged coaxially to the second cable reel (14).

5. Reeling mechanism in accordance with any one of the preceding claims, characterised in that the second cable reel (14) sits rotatably on a shaft (20) fixed relative to the housing and the spring arrangement (16) accommodated in the hollow cavity (21) which is formed as a spiral spring (16) is fixed radially outwardly to the second cable reel (14) and is fixed radially inwardly to the housing.

6. Reeling mechanism in accordance with claim 5, characterised in that the spiral spring (16) is fixed radially inwardly on a spigot (22) which is fixed relative to the housing which carries the shaft (20) and has a larger diameter than the shaft (20).

7. Reeling mechanism in accordance with one of the preceding claims, characterised in that the two cable reels (12, 14) extend conically in opposite directions.

8. Reeling mechanism in accordance with one of the claims 1 to 6, characterised in that the generatrices of the two cable reels (12, 14) extend oppositely curved to one another.

9. Reeling mechanism in accordance with claim 8, characterised in that the generatrices of the two cable reels (12, 14) are oppositely curved in such a way that a larger resetting force which changes only a little is present at the start of the belt cable-out movement in the range of application (27) but reduces in step-like manner to a lower value from a predetermined cable-out length onwards at the start of the wearing range (28).

10. Reeling mechanism in accordance with one of the preceding claims, characterised in that the mean diameter of the first cable reel (12) which carries the belt reel (11) is substantially smaller than the mean diameter of the cable reel (14) which is connected to the spring arrangement (16).

11. Reeling mechanism in accordance with one of the preceding claims, characterised in that the larger diameter of the first cable reel (12) is substantially the same as the smaller diameter of the second cable reel (14).

12. Reeling mechanism in accordance with one of the preceding claims, characterised in that the axial groove spacing of the second cable reel (14) is constant and larger than the likewise constant axial groove spacing of the first cable reel (12).

## Revendications

1. Enrouleur de ceintures de sécurité rappelé par ressort pour véhicules automobiles avec un galet de sangle (11) qui est relié de façon résistante à la torsion, en particulier de façon coaxiale et directe, à une première poulie (12) se rétrécissant dans un sens axial avec une rainure de guidage (15) hélicoïdale à sa périphérie, laquelle rainure est reliée par un élément de traction (13) enroulé dans le sens contraire au sens d'enroulement de la ceinture de sécurité (17) sur le galet de sangle (11) dans la rainure de guidage (15), fixé à une extrémité sur la poulie (12) et flexible, de façon résistante à la torsion, à une deuxième poulie (14) présentant un rétrécissement dans le sens axial opposé, disposée parallèlement et dans une orientation latérale par rapport à elle, avec une rainure de guidage (18) hélicoïdale, sur laquelle est fixée l'autre extrémité de l'élément de traction et dans la rainure de guidage (18) de laquelle est enroulé l'élément de traction et qui est pré-tendue par un dispositif de ressort (16), de préférence un ressort spiral, dans le sens d'enroulement de l'élément de traction (13) sur la deuxième poulie (14) et de la ceinture de sécurité (17) sur le galet de sangle (11), les deux rainures de guidage (15, 18) étant conçues et disposées sur les poulies (12, 14) de telle façon que la partie d'organe de traction (13') tendu et reliant les deux poulies (12, 14) fait place au moins pratiquement sans pliure à deux organes de traction se trouvant sur les poulies (12, 14), le dispositif de ressort (16) étant logé dans une cavité (21) de la deuxième poulie (14), caractérisé en ce que la cavité (21) est prévue dans le rétrécissement de la deuxième poulie (14) et est entourée au moins partiellement par le rainure de guidage (15).

2. Enrouleur selon la revendication 1, caractérisé en ce que la cavité (21) est ouverte en direction d'une surface frontale de la deuxième poulie (14) et le dispositif de ressort (16) est inséré par cet endroit.

3. Enrouleur selon la revendication 1, caractérisé en ce que la cavité (21) est prévue sur le côté de la deuxième poulie (14) en direction de laquelle le diamètre augmente.

4. Enrouleur selon l'une quelconque des revendications précédentes, caractérisé en ce que la cavité (21) est disposée de façon coaxiale par rapport à la deuxième poulie (14).

5. Enrouleur selon l'une quelconque des revendications précédentes, caractérisé en ce que la deuxième poulie (14) est montée de façon pivotante sur un arbre (20) fixe sur boîtier et le dispositif de ressort logé dans la cavité (21) et se présentant sous la forme d'un ressort spiral (16) est logé radialement à l'extérieur sur la deuxième poulie (14) et radialement à l'intérieur fixé au boîtier.

6. Enrouleur selon la revendication 5, caractérisé en ce que le ressort spiral (16) est disposé radialement à l'intérieur sur un tenon (22) fixé au boîtier et supportant l'arbre (20) avec un diamètre supérieur à l'arbre (20).

7. Enrouleur selon l'une quelconque des revendications précédentes, caractérisé en ce que les deux poulies (12, 14) ont une forme effilée dans le sens contraire.

8. Enrouleur selon l'une quelconque des revendications 1 à 6, caractérisé en ce que les génératrices des deux poulies (12, 14) vont l'une vers l'autre avec une courbure en sens opposé.

9. Enrouleur selon la revendication 8, caractérisé en ce que les génératrices des deux poulies (12, 14) sont courbées en sens inverse de telle sorte que, au début du mouvement de sortie de la sangle, on a dans la zone de dépose (27) une force de rappel assez grande qui ne varie que légèrement, et qui prend brusquement une valeur faible à partir d'une longueur de sortie prédéfinie au début de la zone de port (28).

10. Enrouleur selon l'une quelconque des revendications précédentes, caractérisé en ce que le diamètre moyen de la première poulie (12) portant le galet de sangle (11) est nettement inférieur au diamètre moyen de la poulie (14) reliée au dispositif de ressort (16).

11. Enrouleur selon l'une quelconque des revendications précédentes, caractérisé en ce que le diamètre plus élevé de la première poulie (12) est sensiblement égal au diamètre inférieur de la deuxième poulie (14).

12. Enrouleur selon l'une quelconque des revendications précédentes, caractérisé en ce que l'espacement axial des rainures de la deuxième poulie (14) est constant et supérieur à l'espacement axial également constant des rainures de la première poulie (12).
